# EUROPEAN PATENT APPLICATION

(11) **EP 4 815 093 A1**
(43) Date of publication of application: **30.09.2026**
(21) Application number: 23959908.7
(22) Date of filing: 30.11.2023
(51) Int. Cl.: H01M 10/0587, H01M 10/0525

(54) **ELECTRODE ASSEMBLY AND PREPARATION METHOD THEREFOR, BATTERY CELL, BATTERY, AND ELECTRIC DEVICE**

(71) Applicant: Contemporary Amperex Technology Co., Limited, Ningde, Fujian 352100 (CN)
(72) Inventor: WU, Yongjiang, Ningde, Fujian 352100 (CN); YANG, Daoshuan, Ningde, Fujian 352100 (CN); LIN, Wenfa, Ningde, Fujian 352100 (CN)
(74) Representative: Ziebig Hengelhaupt Intellectual Property Attorneys Patentanwaltskanzlei PartGmbB
(86) International application number: PCT/CN2023/135694
(87) International publication number: WO 2025/111997

(57) **Abstract**

The present invention belongs to the technical field of batteries. Disclosed are an electrode assembly, a battery cell, a battery and an electric device. The electrode assembly comprises a wound structure and protective layers, wherein the wound structure is formed by winding in a winding direction a stack which comprises a positive electrode sheet and a negative electrode sheet, with a separator sandwiched between the positive electrode sheet and the negative electrode sheet, each of the positive electrode sheet and the negative electrode sheet comprising several bent parts; and both the inner side and outer side of at least one bent part have the protective layers attached thereto, the protective layers on the inner side and outer side of the same bent part being staggered at least at one end in the winding direction.

## Description

### TECHNICAL FIELD

This disclosure relates to the field of battery technology, and in particular, to an electrode assembly and a preparation method therefor, a battery cell, a battery, and an electric device.

### BACKGROUND

New energy batteries are increasingly widely used in life and industry. For example, new energy vehicles equipped with batteries have been widely used, and batteries are also increasingly used in fields such as energy storage.

Battery capacity is one of the important performance indicators for measuring battery performance. How to improve battery capacity has always been one of the research and development topics in the industry. In addition, batteries usually have the risk of thermal runaway and fire. Therefore, how to reduce the risk of thermal runaway and fire of batteries is also a technical problem that needs an urgent solution in battery technology.

### SUMMARY

To solve the above technical problem, this disclosure provides an electrode assembly, a battery cell, a battery, and an electric device, to achieve high battery cell capacity and reduce the thermal runaway risk.

This disclosure is implemented through the following technical solutions.

A first aspect of this disclosure provides an electrode assembly including:
a wound structure, where the wound structure is formed by winding a stacked body including a positive electrode sheet and a negative electrode sheet along a winding direction, a separator being sandwiched between the positive electrode sheet and the negative electrode sheet, and the positive electrode sheet and the negative electrode sheet each including a plurality of bent portions; and
a protective layer, where the protective layer is attached to each of an inner side and an outer side of at least one of the bent portions;
where end portions of the protective layers on the inner and outer sides of a same bent portion are staggered at least at one end along the winding direction.

The protective layers attached to the inner and outer sides of the bent portion have the end portions at one or two ends along the winding direction staggered in the winding direction. On the one hand, a thickness difference at the edges of the protective layers can be greatly reduced to realize smooth transition of the thickness difference, thereby reducing the stress concentration at the edges of the protective layers. This reduces the risk of pore closure of the separator caused by excessive force, and alleviates lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

In some embodiments, end portions of the protective layers on the inner and outer sides of the same bent portion are staggered at two ends along the winding direction.

The staggered design of end portions at two ends allows for smooth transition of the thickness difference at two ends of the bent portion attached with the protective layers, thereby reducing the stress concentration at the two edges. This can better reduce the risk of pore closure of the separator caused by excessive force, and alleviate lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

In some embodiments, two end portions of the protective layer on the inner side along the winding direction respectively extend beyond two corresponding end portions of the protective layer on the outer side of the same bent portion; or
two end portions of the protective layer on the outer side along the winding direction respectively extend beyond two corresponding end portions of the protective layer on the inner side of the same bent portion; or
one end portion of the protective layer on the inner side along the winding direction extends beyond one corresponding end portion of the protective layer on the outer side of the same bent portion, and the other end portion of the protective layer on the inner side along the winding direction is extended beyond by the corresponding other end portion of the protective layer on the outer side.

As described above, the three distributions of the protective layers on the inner and outer sides of the same bent portion all realize staggering at the two ends of the protective layers. This allows for smooth transition of the thickness difference, thereby reducing the stress concentration at the two edges of the protective layers. This reduces the risk of pore closure of the separator caused by excessive force, and alleviates lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

In some embodiments, along a winding axis direction of the wound structure, at least one end of at least one of the protective layers extends beyond active substance of the bent portion.

In this way, area of the active substance of the bent portion covered by the protective layer can be increased, thereby better reducing the risk of cracking of the electrode sheet or detachment of the active substance. This not only improves the capacity of the battery cell but also reduces the risk of thermal runaway and fire.

In some embodiments, the end portions of the protective layers on the inner and outer sides of the same bent portion are staggered by a first preset dimension at one end along the winding direction, and the end portions of the protective layers on the inner and outer sides of the same bent portion are staggered by a second preset dimension at the other end along the winding direction, where the first preset dimension is equal to the second preset dimension, or the first preset dimension is not equal to the second preset dimension.

The first preset dimension may be equal to the second preset dimension, or may not be equal to the second preset dimension. By setting the staggered dimensions at both ends, the thickness difference can transition smoothly, thereby reducing the stress concentration at the two edges of the protective layer. This reduces the risk of pore closure of the separator caused by excessive force, and alleviates lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

In some embodiments, the end portions of the protective layers on the inner and outer sides of the same bent portion are staggered by the first preset dimension at one end along the winding direction, where the first preset dimension does not exceed 2 mm; and/or the end portions of the protective layers on the inner and outer sides of the same bent portion are staggered by the second preset dimension at the other end along the winding direction, where the second preset dimension does not exceed 2 mm.

Limiting the staggered dimension to a range not exceeding 2 mm prevents the staggered dimension from being too large, allowing for a relatively large overlapping region of the protective layers on the inner and outer sides. This not only reduces the stress concentration, but also effectively reduces the risk of cracking and detachment of the active substance. Furthermore, in a case that the protective layer extends beyond the bent portion in the winding axis direction such that the staggered parts of the protective layers on the inner and outer sides expose the adhesive surface, limiting the staggered dimension to not exceeding 2 mm can reduce the occurrence of adhesion to rollers during winding caused by an excessively large exposed adhesive surface.

In some embodiments, the end portions of the protective layers on the inner and outer sides of the same bent portion are staggered by the first preset dimension at one end along the winding direction, where the first preset dimension does not exceed 1.5 mm; and/or the end portions of the protective layers on the inner and outer sides of the same bent portion are staggered by the second preset dimension at the other end along the winding direction, where the second preset dimension does not exceed 1.5 mm.

Limiting the staggered dimension to a range not exceeding 1.5 mm prevents the staggered dimension from being too large, allowing for a relatively large overlapping region of the protective layers on the inner and outer sides. This not only reduces the stress concentration, but also effectively reduces the risk of cracking and detachment of the active substance. Furthermore, in a case that the protective layer extends beyond the bent portion in the winding axis direction such that the staggered parts of the protective layers on the inner and outer sides expose the adhesive surface, limiting the staggered dimension to not exceeding 1.5 mm can reduce the occurrence of adhesion to rollers during winding caused by an excessively large exposed adhesive surface.

In some embodiments, the end portions of the protective layers on the inner and outer sides of the same bent portion are staggered by the first preset dimension at one end along the winding direction, where the first preset dimension does not exceed 1 mm; and/or the end portions of the protective layers on the inner and outer sides of the same bent portion are staggered by the second preset dimension at the other end along the winding direction, where the second preset dimension does not exceed 1 mm.

Limiting the staggered dimension to a range not exceeding 1 mm prevents the staggered dimension from being too large, allowing for a relatively large overlapping region of the protective layers on the inner and outer sides. This not only reduces the stress concentration, but also effectively reduces the risk of cracking and detachment of the active substance. Furthermore, in a case that the protective layer 84 extends beyond the bent portion in the winding axis direction such that the staggered parts of the protective layers on the inner and outer sides expose the adhesive surface, limiting the staggered dimension to not exceeding 1 mm can reduce the occurrence of adhesion to rollers during winding caused by an excessively large exposed adhesive surface.

In some embodiments, the positive electrode sheet and the negative electrode sheet each include a plurality of straight portions, the plurality of bent portions and the plurality of straight portions of the positive electrode sheet are alternately arranged along the winding direction, and the plurality of bent portions and the plurality of straight portions of the negative electrode sheet are alternately arranged along the winding direction; and one end of at least one of the protective layers is attached to a side surface of the bent portion along the winding direction, and the other end extends to a side surface of the straight portion adjacent to the bent portion, or two ends of at least one of the protective layers are both attached to a side surface of the bent portion along the winding direction, or a middle portion of at least one of the protective layers along the winding direction is attached to a side surface of the bent portion, and two ends extend respectively to side surfaces of the two straight portions adjacent to the bent portion.

As described above, for a flat-shaped electrode assembly, the three arrangements of the protective layer can all reduce the risk of cracking of the electrode sheet and detachment of the active substance. This not only improves the capacity of the battery cell but also reduces the risk of thermal runaway and fire.

In some embodiments, the protective layer includes a main layer made of a polymer material.

The main layer made of polymer material is easily accessible and has good toughness and strength, which can effectively reduce the risk of cracking of the electrode sheet or detachment of the active substance.

In some embodiments, the polymer material is at least any one of polyvinyl chloride, polyethylene, polypropylene, polyvinylidene fluoride, hexafluoropropylene-vinylidene fluoride copolymer, tetrafluoropropylene-vinylidene fluoride copolymer, trifluorochloropropylene-vinylidene fluoride copolymer, polyethylene terephthalate, polyimide, polyetherimide, polycarbonate, polystyrene, polyphenylene sulfide, polyvinylidene fluoride, polyvinylidene fluoride copolymer, polyarylate, fiber, nylon, or non-woven fabric.

The above materials are easily accessible and have good toughness and strength, which can reduce the risk of indentations or cracks of the electrode sheet, thereby reducing the risk of abnormal self-discharge and further reducing the risk of thermal runaway and fire.

In some embodiments, the protective layer further includes an adhesive layer, where the main layer is adhered to the side surface of the bent portion through the adhesive layer.

The main layer is adhered to the side surface of the bent portion through the adhesive layer, realizing the adhesion of the protective layer to the bent portion. The adhesion manner allows the main layer to be sufficiently securely attached to the bent portion, and the adhering operation is simple and quick.

In some embodiments, a material of the adhesive layer is at least any one of acrylic-acrylate copolymer, butadiene-styrene copolymer, styrene-acrylic copolymer, styrene-acrylate copolymer, ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A type epoxy resin, ethylene-vinyl acetate copolymer bisphenol F type epoxy resin, glycidyl ether type epoxy resin, glycidyl ester type epoxy resin, silicone type resin, polyurethane, or styrene-isoprene-styrene copolymer.

The above materials are easily accessible and have good adhesion, enabling the main layer to be securely adhered to the bent portion.

In some embodiments, the protective layer includes an ion-permeable portion and/or an ion-blocking portion.

Both the ion-permeable portion and the ion-blocking portion can provide a certain support to the electrode sheet, reducing the risk of indentations or cracks of the electrode sheet, thereby reducing the risk of abnormal self-discharge and further reducing the risk of thermal runaway and fire.

In some embodiments, the protective layers on the inner and outer sides of the bent portion of the positive electrode sheet each include the ion-permeable portion, or the protective layers on the inner and outer sides of the bent portion of the positive electrode sheet each include the ion-blocking portion, or the protective layer on the inner side of the bent portion of the positive electrode sheet includes the ion-blocking portion, and the protective layer on the outer side includes the ion-permeable portion; or
the protective layers on the inner and outer sides of the negative electrode sheet each include the ion-permeable portion.

In this way, this embodiment not only improves the battery cell capacity but also reduces the risk of thermal runaway and fire.

In some embodiments, air permeability of the ion-permeable portion includes 220±70 sec/100 cc.

By setting the air permeability of the ion-permeable portion, the speed at which the ion-permeable portion permeates active ions can be controlled within a suitable speed range. This can improve the battery cell capacity, and avoid lithium precipitation caused by excessively high passage speed.

In some embodiments, a maximum pore size of the ion-permeable portion is in a range of 100 nm to 400 nm.

The pores allow active ions to pass through. Limiting the pore diameter to a range of 100 nm to 400 nm allows active ions to pass through freely, thereby improving the capacity of the battery cell.

In some embodiments, the positive electrode sheet includes a positive electrode current collector, the positive electrode current collector is made of aluminum, and the inner and outer sides of the bent portion of the positive electrode sheet are each attached with the protective layer.

The inner and outer sides of the bent portion of the positive electrode sheet are each attached with the protective layer, effectively reducing the risk of cracking of the aluminum positive electrode current collector and detachment of the active substance.

In some embodiments, the inner and outer sides of the two bent portions at an innermost turn of the positive electrode sheet are each attached with the protective layer.

The bent portion at the innermost turn of the positive electrode sheet has the largest bending degree and is most likely to crack. Therefore, attaching the protective layers to both the inner and outer sides of the two bent portions at the innermost turn can effectively reduce the risk of cracking of the positive electrode sheet and detachment of the active substance.

A second aspect of this disclosure provides a battery cell including: a casing, a cover plate, and at least one of the foregoing electrode assembly, where the casing has an accommodation cavity and an opening, where the electrode assembly is accommodated in the accommodation cavity; and the cover plate closes the opening of the casing.

The battery cell provided in the embodiment of this disclosure not only improves capacity of the battery cell but also reduces the risk of thermal runaway and fire.

A third aspect of this disclosure provides a battery including: a box; and at least one of the foregoing battery cell, where the battery cell is accommodated in the box.

The battery provided in the embodiment of this disclosure not only improves the battery capacity but also reduces the risk of thermal runaway and fire.

A fourth aspect of this disclosure provides an electric device, where the electric device includes the foregoing battery cell or the foregoing battery for providing electric energy.

The electric device provided in the embodiment of this disclosure not only improves the battery capacity but also reduces the risk of thermal runaway and fire.

A fifth aspect of this disclosure provides a preparation method for electrode assembly, including:
providing a positive electrode sheet, a negative electrode sheet, and a separator;
attaching a protective layer to the positive electrode sheet and/or the negative electrode sheet; and
stacking and winding the positive electrode sheet, the negative electrode sheet, and the separator as a whole to form a wound structure, where in the wound structure, a separator is sandwiched between the positive electrode sheet and the negative electrode sheet, the positive electrode sheet and the negative electrode sheet each include a plurality of bent portions, an inner side and an outer side of at least one of the bent portions are each attached with the protective layer, and end portions of the protective layers on the inner and outer sides of a same bent portion are staggered at least at one end along the winding direction.

### Invention effect:

This disclosure provides an electrode assembly, a battery cell, a battery, an electric device, and a preparation method for electrode assembly, to achieve high battery cell capacity and reduce the thermal runaway risk.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this disclosure. Moreover, throughout the accompanying drawings, the same reference signs represent the same parts.

In the accompanying drawings:
FIG. 1 is a schematic structural diagram of a vehicle according to some embodiments of this disclosure;
FIG. 2 is a schematic exploded view of a battery according to some embodiments of this disclosure;
FIG. 3 is a schematic structural diagram of a battery module shown in FIG. 2;
FIG. 4 is a schematic exploded view of a battery cell according to some embodiments of this disclosure;
FIG. 5 is a schematic structural diagram of a cross-section of an electrode assembly according to some embodiments of this disclosure along a direction perpendicular to a winding axis;
FIG. 6 is a schematic structural diagram of a positive electrode sheet of an electrode assembly, with a protective layer attached, in an unfolded state according to some embodiments of this disclosure;
FIG. 7 is a cross-sectional view taken along line A-A in FIG. 6;
FIG. 8 is a schematic structural diagram of a negative electrode sheet of an electrode assembly, with a protective layer attached, in an unfolded state according to some embodiments of this disclosure;
FIG. 9 is a cross-sectional view taken along line B-B in FIG. 8;
FIG. 10 is a schematic structural diagram of a positive electrode sheet or a negative electrode sheet, with a protective layer attached, in an unfolded state according to some embodiments of this disclosure;
FIG. 11 is a partial schematic structural diagram of a cross-section, perpendicular to a winding axis direction, of an electrode assembly according to some embodiments of this disclosure;
FIG. 12 is a partial schematic structural diagram of a cross-section, perpendicular to a winding axis direction, of an electrode assembly according to some other embodiments of this disclosure;
FIG. 13 is a partial schematic structural diagram of a cross-section, perpendicular to a winding axis direction, of an electrode assembly according to still some other embodiments of this disclosure; and
FIG. 14 is a flowchart of a preparation method for electrode assembly according to some embodiments of this disclosure.

### Reference signs:

1 vehicle; 2 battery; 3 controller; 4 motor; 5 box; 51 first box portion; 52 second box portion; 53 accommodating space; 6 battery module; 7 battery cell;
8 electrode assembly; 81 positive electrode sheet; 811 positive electrode current collector; 8111 positive electrode current collecting portion; 8112 positive electrode protrusion; 812 positive electrode active substance layer; 813 insulation layer; 82 negative electrode sheet; 821 negative electrode current collector; 8211 negative electrode current collecting portion; 8212 negative electrode protrusion; 822 negative electrode active substance layer; 83 separator; 84 protective layer;
9 casing; 91 main casing; 92 end cover; 10 positive electrode terminal; 11 pressure relief mechanism; and 12 negative electrode terminal.

### DESCRIPTION OF EMBODIMENTS

The following describes in detail the embodiments of technical solutions of this disclosure with reference to the accompanying drawings. The following embodiments are merely used to describe technical solutions of this disclosure more explicitly, and therefore they are merely used as examples and do not constitute any limitations on the protection scope of this disclosure.

Unless otherwise defined, all technical and scientific terms used herein shall have the same meanings as commonly understood by those skilled in the art to which this disclosure relates. The terms used herein are intended to merely describe the specific embodiments rather than to limit this disclosure. The terms "comprise", "include", and "have" and any other variations thereof in the specification, claims and brief description of drawings of this disclosure are intended to cover non-exclusive inclusions.

In the description of the embodiments of this disclosure, the terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means at least two unless otherwise specifically stated.

In this specification, reference to "embodiment" means that specific features, structures or characteristics described with reference to the embodiment may be incorporated in at least one embodiment of this disclosure. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this disclosure, the orientations or positional relationships indicated by the technical terms "length", "width", "thickness", "upper", "lower", "front", "rear", "left", "right", "vertical", "horizontal", "top", "bottom", "inside", "outside", "circumferential", and the like are based on the orientations or positional relationships as shown in the accompanying drawings. These terms are merely for ease and brevity of description of the embodiments of this disclosure rather than indicating or implying that the means or components mentioned must have specific orientations or must be constructed, manipulated, or used according to specific orientations, and therefore shall not be construed as any limitations on embodiments of this disclosure.

In the description of the embodiments of this disclosure, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this disclosure as appropriate to specific situations.

In the description of the embodiments of this disclosure, unless otherwise expressly specified and defined, the technical term "contact" should be understood in a broad sense, which may be direct contact, or contact through an intermediate medium layer, or contact where there is substantially no interaction force between the two objects in contact, or contact where there is an interaction force between the two objects in contact.

The following describes this disclosure in detail.

Currently, new energy batteries are increasingly widely used in life and industry. New energy batteries are not only used in energy storage power systems such as hydropower, thermal power, wind power, and solar power stations, but are also widely used in electric transportation tools such as electric bicycles, electric motorcycles, and electric vehicles, as well as in various fields such as aerospace. The expanding application fields for power batteries drives continuous growth in market demand.

Battery capacity is one of the important performance indicators for measuring battery performance, which represents the amount of electricity discharged by a battery under certain conditions (discharge rate, temperature, termination voltage, or the like). How to improve battery capacity has always been one of the research and development topics in the industry. In addition, batteries usually have the risk of thermal runaway and fire. Therefore, how to reduce the risk of thermal runaway and fire of batteries is also a technical problem that needs an urgent solution in battery technology.

The battery mentioned in the embodiments of this disclosure is a single physical module that includes one or more battery cells for providing a higher voltage and capacity. When there is a plurality of battery cells, and the plurality of battery cells are connected in series, in parallel, or in series-parallel via a busbar component. For example, the battery mentioned in this disclosure may include a battery module, a battery pack, or the like. A battery typically includes a box configured to enclose one or more battery cells. The box can prevent liquids or other foreign matter from affecting charging or discharging of the battery cell. The battery may alternatively be an energy storage device. The energy storage device includes an energy storage container, an energy storage cabinet, and the like.

In this disclosure, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this disclosure. The battery cell may be cylindrical, flat, rectangular, or another shape, and this is also not limited in the embodiments of this disclosure. The battery cell is typically divided into three types by packaging method: a cylinder battery cell, a prismatic battery cell, and a pouch battery cell, which is also not limited in the embodiments of this disclosure.

The battery cell includes an electrode assembly and an electrolyte. The electrode assembly includes a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active substance layer. The positive electrode active substance layer is applied on a surface of the positive electrode current collector. The positive electrode current collector includes a positive electrode current collecting portion and a positive electrode protrusion protruding from the positive electrode current collecting portion. The positive electrode current collecting portion is coated with the positive electrode active substance layer, at least part of the positive electrode protrusion is not coated with the positive electrode active substance layer, and the positive electrode protrusion is used as a positive electrode tab. A lithium-ion battery cell is used as an example. The positive electrode current collector may be made of aluminum. The positive electrode active substance layer includes a positive electrode active substance, and the positive electrode active substance may be lithium cobalt oxide, lithium iron phosphate, ternary lithium, lithium manganese oxide, or the like. The negative electrode sheet includes a negative electrode current collector and a negative electrode active substance layer. The negative electrode active substance layer is applied on a surface of the negative electrode current collector. The negative electrode current collector includes a negative electrode current collecting portion and a negative electrode protrusion protruding from the negative electrode current collecting portion. The negative electrode current collecting portion is coated with the negative electrode active substance layer, at least part of the negative electrode protrusion is uncoated with the negative electrode active substance layer, and the negative electrode protrusion is used as a negative electrode tab. The negative electrode current collector may be made of copper, and the negative electrode active substance layer includes a negative electrode active substance which may be carbon, silicon, or the like. To allow a high current to pass through without any fusing, a plurality of positive tabs are provided and stacked together, and a plurality of negative tabs are provided and stacked together. The separator is a separator. The separator is not limited to any particular type in this disclosure, and may be any well-known porous separator with good chemical stability and mechanical stability. In an example, a main material of the separator may be selected from at least one of glass fiber, non-woven fabrics, polyethylene, polypropylene, polyvinylidene fluoride, or ceramic. In addition, the electrode assembly may be a wound structure or a stacked structure. However, the embodiments of this disclosure are not limited thereto.

During charging of the lithium-ion battery cell, lithium ions are deintercalated from the positive electrode active substance layer and intercalated into the negative electrode active substance layer. However, some exceptions may occur, for example, insufficient space for lithium intercalation in the negative electrode active substance layer, excessively large resistance for intercalation of lithium ions into the negative electrode active substance layer, excessively rapid deintercalation of lithium ions from the positive electrode active substance layer, inability of intercalating deintercalated lithium ions into the negative electrode active substance layer of the negative electrode sheet in the same amount, or lithium ions that cannot be intercalated into the negative electrode sheet obtaining electrons only on the surface of the negative electrode sheet, forming elemental metallic lithium. This phenomenon is lithium precipitation. Lithium precipitation not only reduces performance of lithium-ion battery cells and greatly shortens the cycle life, but also limits a fast charging capacity of the lithium-ion battery cells. In addition, when lithium precipitation occurs in the lithium-ion battery cells, resulting lithium metal is so active to react with the electrolyte at a lower temperature, causing a lower self-heating start temperature and a higher self-heating rate, and therefore severely affecting battery cell safety. Furthermore, in case of severe lithium precipitation, deintercalated lithium ions may form lithium crystals on the surface of the negative electrode sheet, and the lithium crystals are prone to pierce the separator, leaving the adjacent positive electrode sheet and negative electrode sheet at risk of short circuit.

Currently, the inner side and outer side of the bent portions of the positive electrode sheet and the negative electrode sheet of some electrode assemblies are adhered with protective layers to prevent cracking of the bent portions of the electrode sheets or detachment of the active substance during pre-pressing and hot-pressing, thereby improving capacity of the battery cell. However, the inventors of this disclosure have noticed that the stacking of the protective layers adhered to the inner side and outer side causes a large thickness difference at the edge of the protective layers compared to the part without the protective layers, resulting in a large concentrated stress at the edges of the protective layers during pressing. This causes the corresponding separators at the edges to be subjected to excessive force and undergo pore closure, leading to lithium precipitation. Moreover, the electrode sheet at the stress concentration point may exhibit indentations. After long-term cycling of the battery cell, the expansion force is relatively large, and the continuous stress may cause the electrode sheet to crack. After cracking, burrs may form, and the burrs are likely to pierce the separator, leading to abnormal self-discharge, and even causing the risk of thermal runaway and fire.

The inventors of this disclosure have found through research that by staggering the edges of the protective layers adhered to the inner and outer sides of the bent portion, the thickness difference at the edge of the protective layer can be greatly reduced, thereby reducing the stress concentration degree at the edge of the protective layer. This reduces the risk of pore closure of the separator caused by excessive force, and alleviates lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

Based on this design concept, the inventors of this disclosure have designed an electrode assembly. The electrode assembly includes a wound structure and a protective layer, where the wound structure is formed by winding a stacked body including a positive electrode sheet and a negative electrode sheet along a winding direction, a separator being sandwiched between the positive electrode sheet and the negative electrode sheet, and the positive electrode sheet and the negative electrode sheet each including a plurality of bent portions; and an inner side and an outer side of at least one of the bent portions are attached with the protective layer, where end portions of the protective layers on the inner and outer sides of the same bent portion are staggered at least at one end along the winding direction.

The edges of the protective layers attached to the inner and outer sides of the bent portion are staggered in the winding direction, which can greatly reduce the thickness difference at the edges of the protective layers. This allows for smooth transition of the thickness difference, thereby reducing the stress concentration at the edge of the protective layer. This reduces the risk of pore closure of the separator caused by excessive force, and alleviates lithium precipitation, thereby improving the battery capacity. Moreover, the risk of indentation or cracking of the electrode sheet is reduced, thereby reducing the risk of abnormal self-discharge and further reducing the risk of thermal runaway and fire.

The technical solution described in the embodiments of this disclosure is applicable to batteries and electric devices using batteries. The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle. The new energy vehicle may be a battery electric vehicle, a hybrid electric vehicle, or an extended-range electric vehicle. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this disclosure impose no special limitation on the foregoing electric device.

An embodiment of this disclosure provides an electric device. In the following embodiments, for ease of description, the electric device of an embodiment of this disclosure being a vehicle 1 is used as an example for description of the following embodiments. The following description is made with reference to the accompanying drawings.

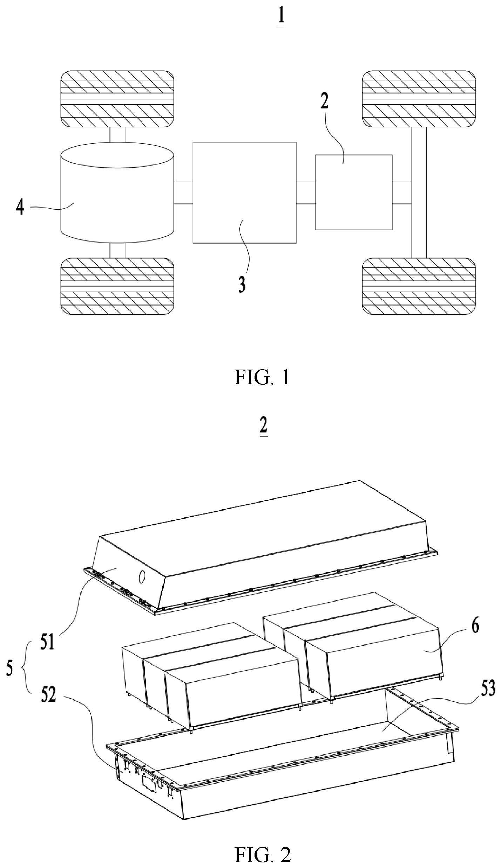

FIG. 1 is a schematic structural diagram of a vehicle 1 according to some embodiments of this disclosure. The vehicle 1 may be a fuel vehicle, a gas vehicle, or a new energy vehicle. The new energy vehicle may be a battery electric vehicle, a hybrid electric vehicle, or an extended-range electric vehicle. As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power source for the vehicle 1. The vehicle 1 may further include a controller 3 and a motor 4, where the controller 3 is configured to control the battery 2 to supply power to the motor 4, for example, to satisfy a working electricity need during start, navigation, and driving of the vehicle 1.

In some embodiments of this disclosure, the battery 2 may be used as not only the operational power source for the vehicle 1 but also a driving power source for the vehicle 1, replacing all or part of the fossil fuel or the natural gas to provide driving power for the vehicle 1.

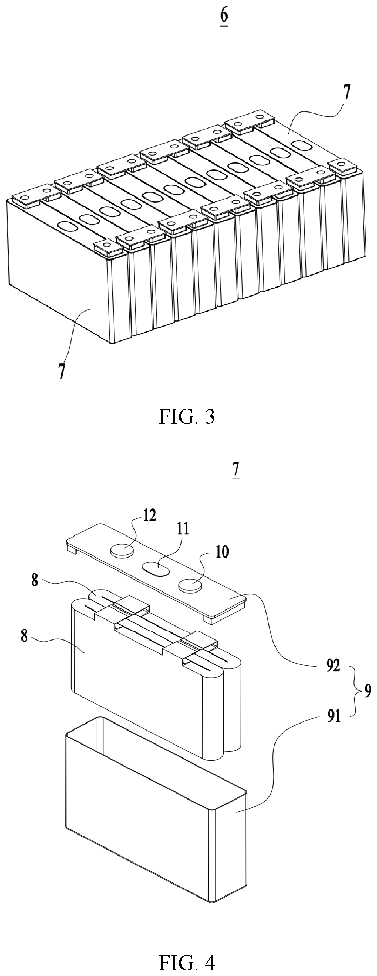

FIG. 2 is a schematic exploded view of a battery 2 according to some embodiments of this disclosure. FIG. 3 is a schematic structural diagram of a battery module shown in FIG. 2. FIG. 4 is a schematic exploded view of a battery cell according to some embodiments of this disclosure.

As shown in FIG. 2 and FIG. 3, the battery 2 includes a box 5 and at least one battery cell 7, and the at least one battery cell 7 is accommodated in the box 5.

The box 5 is configured to accommodate the battery cell 7, and the box 5 may be of various structures. In some embodiments, the box 5 may include a first box portion 51 and a second box portion 52. The first box portion 51 and the second box portion 52 fit together. The first box portion 51 and the second box portion 52 jointly define an accommodating space 53 for accommodating the battery cell 7. The second box portion 52 may be a hollow structure with an opening formed at an end, the first box portion 51 is a plate-shaped structure, and the first box portion 51 covers the opening side of the second box portion 52 so as to form the box 5 having the accommodating space 53; and the first box body portion 51 and the second box portion 52 may alternatively both be a hollow structure with an opening formed at an end, and the opening side of the first box portion 51 is engaged with the opening side of the second box portion 52 so as to form the box 5 having the accommodating space 53. Certainly, the first box portion 51 and the second box portion 52 may be of various shapes, such as cylinder and cuboid.

In order to improve airtightness after connection of the first box portion 51 and the second box portion 52, a sealing element, such as a sealant and a sealing ring, may further be disposed between the first box portion 51 and the second box portion 52.

Assuming that the first box portion 51 fits on a top of the second box portion 52, the first box portion 51 may also be referred to as an upper box cover, and the second box portion 52 may also be referred to as a lower box.

In the battery 2, the battery cell 7 may be present in plurality, and the plurality of battery cells 7 may be connected in series, parallel, or series-parallel, where being connected in series-parallel means a combination of series and parallel connections of the plurality of battery cells 7. The plurality of battery cells 7 may be directly connected in series, parallel, or series-parallel, and then an entirety of the plurality of battery cells 7 is accommodated in the accommodating space 53 formed by the first box portion 51 and the second box portion 52; or certainly, the battery 2 may be formed by a plurality of battery cells 7 being connected in series, parallel, or series-parallel first to form a battery module 6 and then a plurality of battery modules 6 being connected in series, parallel, or series-parallel to form an entirety which is accommodated in the accommodating space 53 formed by the first box portion 51 and the second box portion 52. The battery 2 may further include other structures. For example, the battery 2 may further include a busbar configured to implement electrical connection between the plurality of battery cells 7.

In some embodiments of this disclosure, the battery 2 may be an energy storage device. The energy storage device includes an energy storage container, an energy storage cabinet, and the like.

In some embodiments of this disclosure, the battery cell 7 may be a secondary battery. The secondary battery is a battery cell 7 that can be charged after discharge to activate active substances for continuous use.

The battery cell 7 may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, and a lead storage battery cell. This is not limited in the embodiments of this disclosure.

As shown in FIG. 4, the battery cell 7 includes a casing 9 and at least one electrode assembly 8. The casing 9 is configured to package components such as the electrode assembly 8 and an electrolyte. The casing 9 may be a steel casing, an aluminum casing, a plastic casing (such as polypropylene), a composite metal casing (such as a copper-aluminum composite casing), an aluminum-plastic film, or the like.

In some embodiments, the casing 9 includes an end cover 92 and a main casing 91. The main casing 91 has an accommodation cavity and an opening. The electrode assembly 8 and substances such as electrolyte are accommodated in the accommodation cavity. The cover plate 92 closes the opening of the casing 91 to form a closed space for accommodating the electrode assembly 8 and substances such as electrolyte. The main casing 91 may be provided with one or more openings. One or more end covers 92 may be provided.

The main casing 91 may be of various shapes, such as cylindrical and rectangular. The shape of the main casing 91 may be determined based on a specific shape of the electrode assembly 8. For example, if the electrode assembly 8 is a cylindrical structure, a cylindrical casing may be selected; if the electrode assembly 8 is a rectangular structure, a rectangular casing may be selected. Certainly, the end cover 92 may also be of various structures. For example, the end cover 92 is a plate-like structure, a hollow structure with an opening at one end, or the like. For example, in FIG. 4, the main casing 91 is a rectangular structure, and the end cover 92 is a plate-like structure. The end cover 92 covers the opening on the top of the main casing 91.

In some embodiments, the battery cell 7 may further include a positive electrode terminal 10, a negative electrode terminal 12, and a pressure relief mechanism 11. The positive electrode terminal 10, the negative electrode terminal 12, and the pressure relief mechanism 11 are all installed on the end cover 92. Both the positive electrode terminal 10 and the negative electrode terminal 12 are configured to be electrically connected to the electrode assembly 8 to output the electric energy generated by the electrode assembly 8. The pressure relief mechanism 11 is configured to release internal pressure of the battery cell 7 when the internal pressure or temperature of the battery cell 7 reaches a predetermined value.

For example, the pressure relief mechanism 11 is located between the positive electrode terminal 10 and the negative electrode terminal 12. The pressure relief mechanism 11 may be a component such as an explosion-proof valve, an explosion-proof sheet, an air valve, a pressure relief valve, or a safety valve.

Certainly, in some other embodiments, the casing 9 may alternatively be another structure. For example, the casing 9 includes a main casing 91 and two end covers 92. The main casing 91 is a hollow structure with openings on opposite sides. One end cover 92 corresponds to and covers one opening of the main casing 91 and forms a sealed connection to form a closed space for accommodating the electrode assembly 8 and the electrolyte. In this structure, the positive electrode terminal 10 and the negative electrode terminal 12 may be installed on a same end cover 92, or may be installed on different end covers 92. A pressure relief mechanism 11 may be installed on one end cover 92, or a pressure relief mechanism 11 may be installed on the two end covers 92.

It should be noted that in the battery cell 7, one or more electrode assemblies 8 may be accommodated in the casing 9. For example, in FIG. 4, there are two electrode assemblies 8.

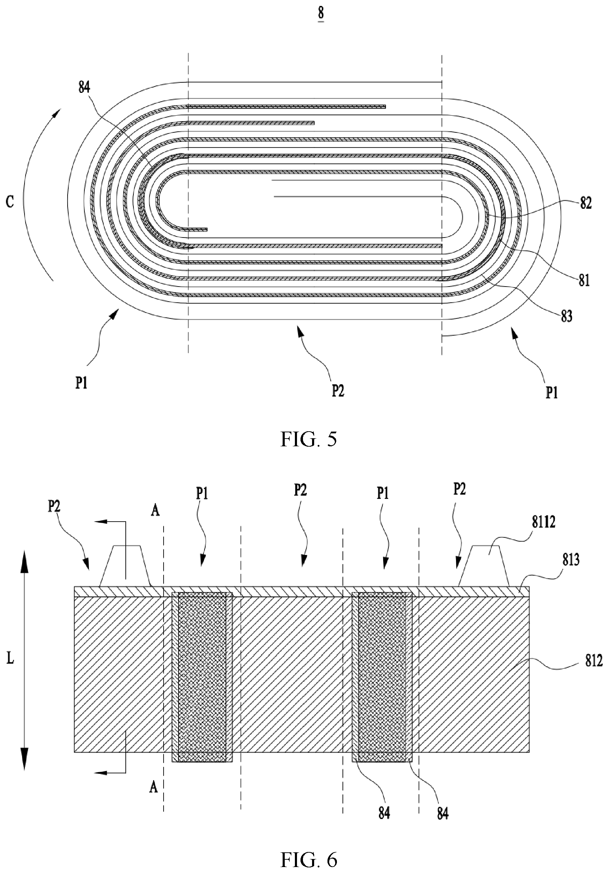

The following describes some embodiments of this disclosure in detail with reference to FIGs. 5 to 13.

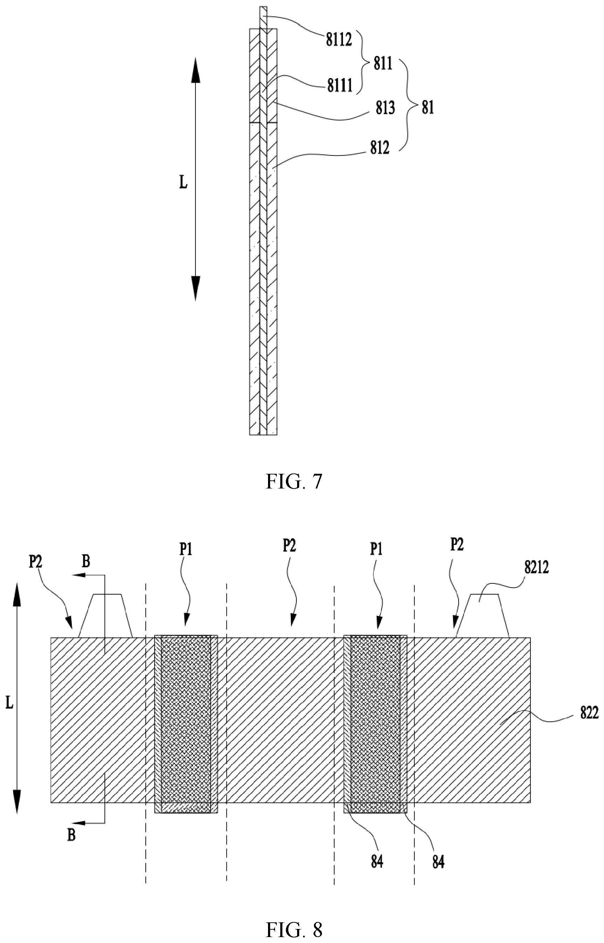

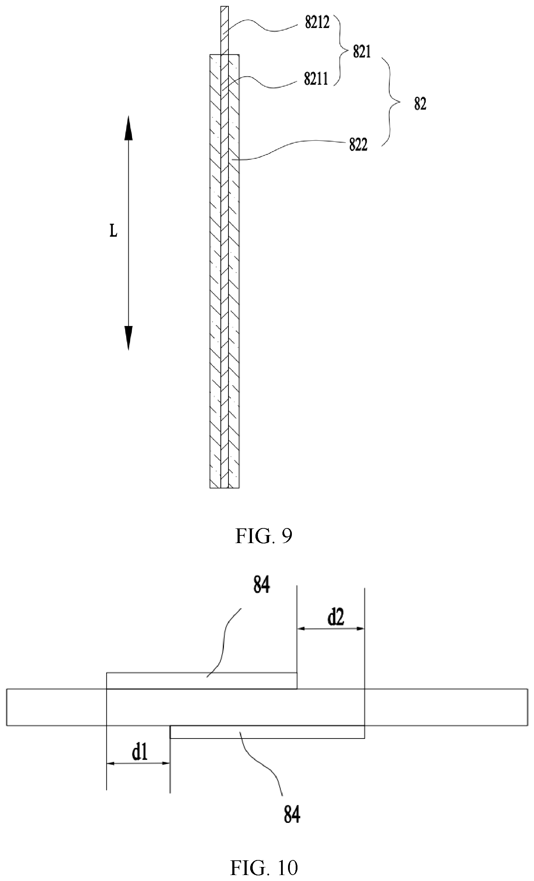

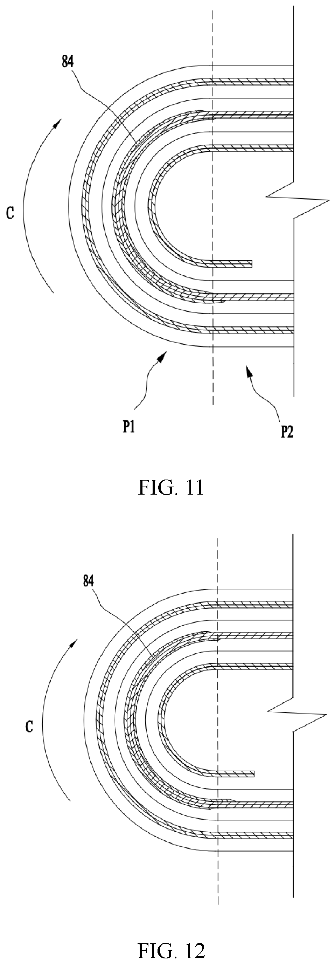

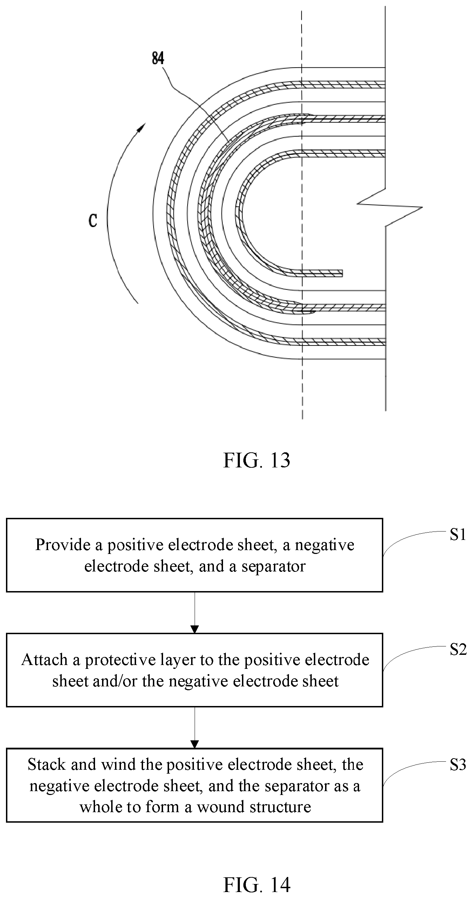

FIG. 5 is a schematic structural diagram of a cross-section of an electrode assembly according to some embodiments of this disclosure along a direction perpendicular to a winding axis. FIG. 6 is a schematic structural diagram of a positive electrode sheet of an electrode assembly, with a protective layer attached, in an unfolded state according to some embodiments of this disclosure. FIG. 7 is a cross-sectional view taken along line A-A in FIG. 6. FIG. 8 is a schematic structural diagram of a negative electrode sheet of an electrode assembly, with a protective layer attached, in an unfolded state according to some embodiments of this disclosure. FIG. 9 is a cross-sectional view taken along line B-B in FIG. 8. FIG. 10 is a schematic structural diagram of a positive electrode sheet or a negative electrode sheet, with a protective layer attached, in an unfolded state according to some embodiments of this disclosure. FIG. 11 is a partial schematic structural diagram of a cross-section, perpendicular to a winding axis direction, of an electrode assembly according to some embodiments of this disclosure. FIG. 12 is a partial schematic structural diagram of a cross-section, perpendicular to a winding axis direction, of an electrode assembly according to some other embodiments of this disclosure. FIG. 13 is a partial schematic structural diagram of a cross-section, perpendicular to a winding axis direction, of an electrode assembly according to still some other embodiments of this disclosure.

As shown in FIG. 5, the electrode assembly 8 provided by the embodiments of this disclosure includes a wound structure and a protective layer 84. The wound structure is formed by winding a stacked body including a positive electrode sheet 81 and a negative electrode sheet 82 along a winding direction C. A separator 83 is sandwiched between the positive electrode sheet 81 and the negative electrode sheet 82. The positive electrode sheet 81 and the negative electrode sheet 83 each include a plurality of bent portions. A protective layer 84 is attached to both inner and outer sides of at least one of the bent portions. End portions of the protective layers 84 on the inner and outer sides of a same bent portion are staggered at least at one end along the winding direction C.

The winding direction C is a direction in which the positive electrode sheet 81 and the negative electrode sheet 83 are wound from the center to the periphery. In FIG. 5, the winding direction C is clockwise.

As shown in FIGs. 6 and 7, the positive electrode sheet 81 includes a positive electrode current collector 811 and a positive electrode active substance layer 812. The positive electrode active substance layer 812 is applied on a surface of the positive electrode current collector 811. The positive electrode current collector 811 includes a positive electrode current collecting portion 8111 and a positive electrode protrusion 8112 protruding from the positive electrode current collecting portion 8111. The positive electrode current collecting portion 8111 is coated with the positive electrode active substance layer 812, at least part of the positive electrode protrusion 8112 is not coated with the positive electrode active substance layer 812, and the positive electrode protrusion 8112 is used as a positive electrode tab. A lithium-ion battery cell is used as an example. The positive electrode current collector 811 may be made of aluminum. The positive electrode active substance layer 812 includes a positive electrode active substance, and the positive electrode active substance may be lithium cobalt oxide, lithium iron phosphate, ternary lithium, lithium manganese oxide, or the like.

In some embodiments, the positive electrode current collecting portion 8111 has only partial region coated with the positive electrode active substance layer 812, and a part of the positive electrode current collecting portion 8111 not coated with the positive electrode active substance layer 812 is coated with an insulation layer 813. The insulation layer 813 is located on a side of the positive electrode active substance layer 812 closer to the positive electrode tab. For example, the root of the positive electrode tab closer to the positive electrode current collecting portion 8111 is also coated with an insulation layer 812.

As shown in FIGs. 8 and 9, the negative electrode sheet 82 includes a negative electrode current collector 821 and a negative electrode active substance layer 822. The negative electrode active substance layer 822 is applied on a surface of the negative electrode current collector 821. The negative electrode current collector 821 includes a negative electrode current collecting portion 8211 and a negative electrode protrusion 8212 protruding from the negative electrode current collecting portion 8211. The negative electrode current collecting portion 8211 is coated with the negative electrode active substance layer 822, at least part of the negative electrode protrusion 8212 is not coated with the negative electrode active substance layer 822, and the negative electrode protrusion 8212 is used as a negative electrode tab. The negative electrode current collector 821 may be made of copper. The negative electrode active substance layer 822 includes a negative electrode active substance, and the negative electrode active substance may be carbon, silicon, or the like.

The separator 83 is configured to separate the positive electrode sheet 81 and the negative electrode sheet 82, to reduce the risk of a short circuit between the positive electrode sheet 81 and the negative electrode sheet 82. The separator 83 has a large number of through micropores, which ensure free passage of electrolyte ions and exhibit good permeability for lithium ions. Therefore, the separator 83 substantially cannot block the passage of lithium ions. For example, the material of the separator 83 may be PP (polypropylene, polypropylene) or PE (polyethylene, polyethylene).

The positive electrode sheet 81, the negative electrode sheet 82, and the separator 83 are all strip-shaped structures. In the embodiments of this disclosure, the negative electrode sheet 82, the separator 83, the positive electrode sheet 81, and another separator 83 may be stacked in sequence to form a stacked body, and then the stacked body is wound for two or more turns to form a wound structure.

The protective layer 84 is a sheet-like structure attached to the bent portions of the positive electrode sheet 81 and/or the negative electrode sheet 82. It has a certain toughness and strength. When the electrode sheet is deformed under stress, the protective layer 84 interacts with the electrode sheet to which it is attached, which helps increase the strength of the electrode sheet, thereby reducing the risk of cracking of the electrode sheet or detachment of the active substance. Before the negative electrode sheet 82, the separator 83, and the positive electrode sheet 81 are stacked, portions to be bent of the positive electrode sheet 81 and the negative electrode sheet 82 are found through dimension calculation, and the protective layer 84 is attached to the portions to be bent. This ensures that during the process of stacking and winding the negative electrode sheet 82, the separator 83, and the positive electrode sheet 81 as a whole to form the electrode assembly 8, the protective layer 84 can protect the bent portions of the positive electrode sheet 81 and the negative electrode sheet 82, thereby reducing the risk of cracking of the electrode sheet or detachment of the active substance.

The electrode assembly 8 may be of various shapes. For example, the electrode assembly 8 may be flat, prismatic (for example, triangular prism, quadrangular prism, or hexagonal prism), or of other shapes.

The bent portions are bent sections of the positive electrode sheet 81 and the negative electrode sheet 82.

In some embodiments, the electrode assembly 10 is prismatic, and the bent portions are the corner portions of the positive electrode sheet 81 and the negative electrode sheet 82.

In some embodiments, as shown in FIG. 5, the electrode assembly 10 is flat, and the bent portions are the arc-shaped portions of the positive electrode sheet 81 and the negative electrode sheet 82. In FIG. 5, the portions of the positive electrode sheet 81 and the negative electrode sheet 82 to the left of the left dashed line and to the right of the right dashed line are bent portions.

In some embodiments, attachment refers to adhesion or coating or spraying.

The protective layers 84 attached to the inner and outer sides of the bent portion have the end portions at one end or two ends along the winding direction C staggered in the winding direction C, which can greatly reduce the thickness difference at the edges of the protective layers 81. This allows for smooth transition of the thickness difference, thereby reducing the stress concentration at the edges of the protective layers 84. This reduces the risk of pore closure of the separator 83 caused by excessive force, and alleviates lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

In some embodiments, the end portions of the protective layers 84 on the inner and outer sides of a same bent portion are staggered at one end along the winding direction C, and the end portions at the other end are aligned.

With the end portions at one end staggered and those at the other end aligned, the stress concentration at one edge can be reduced to a certain extent. This reduces the risk of pore closure of the separator 83 caused by excessive force, and alleviates lithium precipitation, thereby improving the battery cell capacity.

In some embodiments, the end portions of the protective layers 84 on the inner and outer sides of the same bent portion are staggered at two ends along the winding direction C.

The staggered design of end portions at two ends allows for smooth transition of the thickness difference at two ends of the bent portion attached with the protective layers 84, thereby reducing the stress concentration at the two edges. This can reduce the risk of pore closure of the separator 83 caused by excessive force, and alleviate lithium precipitation, thereby improving the battery cell capacity.

In some embodiments, as shown in FIG. 12, two end portions of the protective layer 84 on the inner side along the winding direction respectively extends beyond two corresponding ends of the protective layer on the outer side of the same bent portion; or as shown in FIG. 13, two end portions of the protective layer on the outer side along the winding direction respectively extend beyond two corresponding end portions of the protective layer on the inner side of the same bent portion; or as shown in FIG. 11, one end portion of the protective layer on the inner side along the winding direction extends beyond one corresponding end portion of the protective layer on the outer side of the same bent portion, and the other end portion of the protective layer on the inner side along the winding direction is extended beyond by the corresponding other end portion of the protective layer on the outer side.

As described above, the three distributions of the protective layers 84 on the inner and outer sides of the same bent portion all realize staggering at the two ends of the protective layers 84. This allows for smooth transition of the thickness difference, thereby reducing the stress concentration at the two edges of the protective layers 84. This reduces the risk of pore closure of the separator 83 caused by excessive force, and alleviates lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

In some embodiments, along the winding axis direction L of the wound structure, at least one end of at least one of the protective layers 84 extends beyond active substance of the bent portion.

The active substance includes a positive electrode active substance that is applied on the positive electrode current collector 811 to form the positive electrode active substance layer 812, and a negative electrode active substance that is applied on the negative electrode current collector 821 to form the negative electrode active substance layer 822. At least one end of the protective layer 84 attached to the positive electrode sheet 81 along the winding axis direction L extends beyond the positive electrode active substance of the positive electrode sheet 81; and at least one end of the protective layer 84 attached to the negative electrode sheet 82 along the winding axis direction L extends beyond the negative electrode active substance of the negative electrode sheet 82.

In this way, area of the active substance of the bent portion covered by the protective layer 84 can be increased, thereby better reducing the risk of cracking of the electrode sheet or detachment of the active substance, and improving the capacity of the battery cell.

For example, as shown in FIGs. 6 and 8, along the winding axis direction L of the wound structure, both ends of at least one of the protective layers 84 extend beyond the active substance of the bent portion.

This further increases the area of the bent portion covered by the protective layer 84, thereby better reducing the risk of cracking of the electrode sheet or detachment of the active substance, improving the capacity of the battery cell, and reducing the risk of thermal runaway and fire.

In some embodiments, along the winding axis direction L of the wound structure, a dimension by which at least one end of at least one protective layer 84 extends beyond the active substance of the bent portion is in a range of 1 mm to 3 mm.

For example, along the winding axis direction L of the wound structure, the dimension by which at least one end of at least one protective layer 84 extends beyond the active substance of the bent portion is 1 mm, 2 mm, or 3 mm. Certainly, it may alternatively be other values, which is not specifically limited herein.

For example, as shown in FIG. 6, along the winding axis direction L of the wound structure, one end of at least one protective layer 84 of the positive electrode sheet 81 extends beyond the bent portion, and the other end extends to the insulation layer 813 without extending beyond the bent portion.

In some embodiments, as shown in FIGs. 6 and 8, along the winding axis direction L of the wound structure, at least one end of at least one protective layer 84 extends beyond the bent portion.

In FIG. 6, the portion of the positive electrode sheet 81 located within a region P1 is the bent portion, and the portion located within a region P2 is the straight portion. Correspondingly, in FIG. 8, the portion of the negative electrode sheet 82 located within a region P1 is the bent portion, and the portion located within a region P2 is the straight portion.

It can be understood that the bent portion of the positive electrode sheet 81 includes part of the positive electrode active substance layer 812 and part of the insulation layer 813. The protective layer 84 of the positive electrode sheet 81 extending beyond the bent portion means that the protective layer 84 extends beyond an edge of the insulation layer 813 far from the positive electrode active substance layer 812. The protective layer 84 of the negative electrode sheet 82 extending beyond the bent portion means that the protective layer 84 extends beyond an edge of the negative electrode active substance layer 822.

In this way, the edge of the protective layer 84 that extends beyond one end of the bent portion is not attached to the bent portion so that this edge does not indent the bent portion, thereby reducing the risk of abnormal self-discharge and further reducing the risk of thermal runaway and fire.

For example, along the winding axis direction L of the wound structure, two end portions of at least one protective layer 84 of the positive electrode sheet 81 extend beyond the bent portion.

For example, as shown in FIG. 8, along the winding axis direction L of the wound structure, two end portions of at least one protective layer 84 of the negative electrode sheet 82 both extend beyond the bent portion.

In this way, the edges of the protective layer 84 that extend beyond two ends of the bent portion are not attached to the bent portion so that these edges do not indent the bent portion, thereby reducing the risk of abnormal self-discharge and further reducing the risk of thermal runaway and fire.

In some embodiments, as shown in FIG. 10, the end portions of the protective layers 84 on the inner and outer sides of the same bent portion are staggered by a first preset dimension d1 at one end along the winding direction C, and the end portions of the protective layers 84 on the inner and outer sides of the same bent portion are staggered by a second preset dimension d2 at the other end along the winding direction C, where the first preset dimension d1 is equal to the second preset dimension d2, or the first preset dimension d1 is not equal to the second preset dimension d2.

The first preset dimension d1 may be equal to the second preset dimension d2, or may not be equal to the second preset dimension d2. By setting the staggered dimensions at two ends, the thickness difference transitions smoothly, thereby reducing the stress concentration at the two edges of the protective layer 84, This reduces the risk of pore closure of the separator 83 caused by excessive force, and alleviates lithium precipitation, thereby improving the battery cell capacity. Moreover, the risk of indentation or cracking of the electrode sheet is reduced, thereby reducing the risk of abnormal self-discharge and further reducing the risk of thermal runaway and fire.

In some embodiments, the end portions of the protective layers 84 on the inner and outer sides of the same bent portion are staggered by the first preset dimension d1 at one end along the winding direction C, where the first preset dimension d1 does not exceed 2 mm; and/or the end portions of the protective layers 84 on the inner and outer sides of the same bent portion are staggered by the second preset dimension d2 at the other end along the winding direction C, where the second preset dimension d2 does not exceed 2 mm.

Limiting the staggered dimension to a range not exceeding 2 mm prevents the staggered dimension from being too large, allowing for a relatively large overlapping region of the protective layers 84 on the inner and outer sides. This not only reduces the stress concentration, but also effectively reduces the risk of cracking and detachment of the active substance. Furthermore, in a case that the protective layer 84 extends beyond the bent portion in the winding axis direction L such that the staggered parts of the protective layers 84 on the inner and outer side expose the adhesive surface, limiting the staggered dimension to not exceeding 2 mm can reduce the occurrence of adhesion to rollers during winding caused by an excessively large exposed adhesive surface.

In some embodiments, the end portions of the protective layers 84 on the inner and outer sides of the same bent portion are staggered by the first preset dimension d1 at one end along the winding direction C, where the first preset dimension d1 does not exceed 1.5 mm; and/or the end portions of the protective layers 84 on the inner and outer sides of the same bent portion are staggered by the second preset dimension d2 at the other end along the winding direction C, where the second preset dimension d2 does not exceed 1.5 mm.

Limiting the staggered dimension to a range not exceeding 1.5 mm prevents the staggered dimension from being too large, allowing for a relatively large overlapping region of the protective layers 84 on the inner and outer sides. This not only reduces the stress concentration, but also effectively reduces the risk of cracking and detachment of the active substance. Furthermore, in a case that the protective layer 84 extends beyond the bent portion in the winding axis direction L such that the staggered parts of the protective layers 84 on the inner and outer sides expose the adhesive surface, limiting the staggered dimension to not exceeding 1.5 mm can reduce the occurrence of adhesion to rollers during winding caused by an excessively large exposed adhesive surface.

In some embodiments, the end portions of the protective layers 84 on the inner and outer sides of the same bent portion are staggered by the first preset dimension d1 at one end along the winding direction C, where the first preset dimension d1 does not exceed 1 mm; and/or the end portions of the protective layers 84 on the inner and outer sides of the same bent portion are staggered by the second preset dimension d2 at the other end along the winding direction C, where the second preset dimension d2 does not exceed 1 mm.

Limiting the staggered dimension to a range not exceeding 1 mm prevents the staggered dimension from being too large, allowing for a relatively large overlapping region of the protective layers 84 on the inner and outer sides. This not only reduces the stress concentration, but also effectively reduces the risk of cracking and detachment of the active substance. Furthermore, in a case that the protective layer 84 extends beyond the bent portion in the winding axis direction L such that the staggered parts of the protective layers 84 on the inner and outer side expose the adhesive surface, limiting the staggered dimension to not exceeding 1 mm can reduce the occurrence of adhesion to rollers during winding caused by an excessively large exposed adhesive surface.

In some embodiments, as shown in FIGs. 5, 11 to 13, the positive electrode sheet 81 and the negative electrode sheet 82 each include a plurality of straight portions, the plurality of bent portions and the plurality of straight portions of the positive electrode sheet 81 are alternately arranged along the winding direction C, and the plurality of bent portions and the plurality of straight portions of the negative electrode sheet 82 are alternately arranged along the winding direction C; and one end of at least one protective layer 84 is attached to a side surface of the bent portion along the winding direction C, and the other end extends to a side surface of the straight portion adjacent to the bent portion, or two ends of at least one protective layer 84 are both attached to a side surface of the bent portion along the winding direction C, or a middle portion of at least one protective layer 84 along the winding direction C is attached to a side surface of the bent portion, and two ends extend respectively to side surfaces of the two straight portions adjacent to the bent portion.

Referring to FIG. 5, the electrode assembly 8 is flat-shaped, and the protective layer 84 may be arranged in three configurations depending on distribution positions. First, referring to FIG. 11, one end of each of the protective layers 84 on the inner and outer sides along the winding direction C is attached to a side surface of the bent portion, and the other end extends to a side surface of the straight portion adjacent to the bent portion. Second, referring to FIG. 12, two ends of the protective layer 84 on the outer side along the winding direction C are both attached to a side surface of the bent portion. Third, referring to FIG. 12, a middle portion of the protective layer 84 on the inner side along the winding direction C is attached to a side surface of the bent portion, and two ends extend respectively to side surfaces of the two straight portions adjacent to the bent portion.

As described above, for a flat-shaped electrode assembly 8, the three arrangements of the protective layer 84 can all reduce the risk of cracking of the electrode sheet and detachment of the active substance. This not only improves the capacity of the battery cell but also reduces the risk of thermal runaway and fire.

In some embodiments, the protective layer 84 includes a main layer made of a polymer material.

The main layer made of polymer material is easily accessible and has good toughness and strength, which can effectively reduce the risk of cracking of the electrode sheet or detachment of the active substance.

In some embodiments, the polymer material is a combination of one or more of polyvinyl chloride, polyethylene, polypropylene, polyvinylidene fluoride, hexafluoropropylene-vinylidene fluoride copolymer, tetrafluoropropylene-vinylidene fluoride copolymer, trifluorochloropropylene-vinylidene fluoride copolymer, polyethylene terephthalate, polyimide, polyetherimide, polycarbonate, polystyrene, polyphenylene sulfide, polyvinylidene fluoride, polyvinylidene fluoride copolymer, polyarylate, fiber, nylon, and non-woven fabric.

The above materials are easily accessible and have good toughness and strength, which can reduce the risk of indentations or cracks of the electrode sheet, thereby reducing the risk of abnormal self-discharge and further reducing the risk of thermal runaway and fire.

In some embodiments, the protective layer 84 further includes an adhesive layer, where the main layer is adhered to the side surface of the bent portion through the adhesive layer.

The main layer is adhered to the side surface of the bent portion through the adhesive layer, realizing the adhesion of the protective layer 84 to the bent portion. The adhesion manner allows the main layer to be sufficiently securely attached to the bent portion, and the adhering operation is simple and quick.

In some embodiments, a material of the adhesive layer is a combination of any one or more of acrylic-acrylate copolymer, butadiene-styrene copolymer, styrene-acrylic copolymer, styrene-acrylate copolymer, ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A type epoxy resin, ethylene-vinyl acetate copolymer bisphenol F type epoxy resin, glycidyl ether type epoxy resin, glycidyl ester type epoxy resin, silicone type resin, polyurethane, and styrene-isoprene-styrene copolymer.

The above materials are easily accessible and have good adhesion, realizing secure adhesion of the main layer to the bent portion.

In some embodiments, the protective layer 84 includes an ion-permeable portion and/or an ion-blocking portion.

The ion-permeable portion is a structure with a large number of through pores that can ensure the free passage of active ions. The ion-permeable portion has good permeability to lithium ions. A material of the ion-permeable portion is a combination of any one or more of polyvinyl chloride, polyethylene, polypropylene, polyvinylidene fluoride, hexafluoropropylene-vinylidene fluoride copolymer, tetrafluoropropylene-vinylidene fluoride copolymer, trifluorochloropropylene-vinylidene fluoride copolymer, polyethylene terephthalate, polyimide, polyetherimide, polycarbonate, polystyrene, polyphenylene sulfide, polyvinylidene fluoride or its copolymer, polyarylate, fiber, nylon, and non-woven fabric.

The ion-blocking portion is a structure with no pores or extremely small pores that does not allow active ions to pass through. A material of the ion-blocking portion is a combination of any one or more of polyvinyl chloride, polyethylene, polypropylene, polyvinylidene fluoride, hexafluoropropylene-vinylidene fluoride copolymer, tetrafluoropropylene-vinylidene fluoride copolymer, trifluorochloropropylene-vinylidene fluoride copolymer, polyethylene terephthalate, polyimide, polyetherimide, polycarbonate, polystyrene, polyphenylene sulfide, polyvinylidene fluoride or its copolymer, polyarylate, fiber, nylon, and non-woven fabric.

Both the ion-permeable portion and the ion-blocking portion can provide a certain support to the electrode sheet, reducing the risk of indentations or cracks of the electrode sheet, thereby reducing the risk of abnormal self-discharge and further reducing the risk of thermal runaway and fire.

In some embodiments, air permeability of the ion-permeable portion includes 220±70 sec/100 cc, where sec represents second, and cc represents cubic centimeter.

The air permeability may be measured using the air permeability test method described in GB/T36363-2018. Specifically, under a pressure of 1.21 kPa applied by the testing instrument, a time required for 100 ml of air to pass through a separator with an area of 6.45 cm² is measured in an environment with test temperature, humidity, and atmospheric pressure. The applied pressure of 1.21 kPa is a constant pressure, and the area of 6.45 cm² through which the air passes is a fixed area. Generally, a higher air permeability indicates slower transport of active ions through the ion-permeable portion, and a lower air permeability indicates a faster transport of active ions through the ion-permeable portion.

By setting the air permeability of the ion-permeable portion to 220±70 sec/100 cc, the speed at which active ions pass through the ion-permeable portion can be controlled within a suitable speed range. This can improve the battery cell capacity, and avoid lithium precipitation caused by excessively high passage speed.

For example, the air permeability of the ion-permeable portion may be any one of 160 sec/100 cc, 180 sec/100 cc, 200 sec/100 cc, 230 sec/100 cc, 250 sec/100 cc, and 280 sec/100 cc. Certainly, the air permeability of the ion-permeable portion may alternatively be other values, which are not enumerated herein.

In some embodiments, a minimum pore size of the ion-permeable portion is in a range of 100 nm to 400 nm.

The pore size of the ion-permeable portion may be measured using a scanning electron microscope.

The pores allow active ions such as sodium ions and lithium ions to pass through. Limiting the pore diameter to a range of 100 nm to 400 nm allows active ions to pass through freely, thereby improving the capacity of the battery cell 7.

In some embodiments, the protective layers 84 on the inner and outer sides of the bent portion of the positive electrode sheet 81 each include the ion-permeable portion; and the protective layers 84 on the inner and outer sides of the negative electrode sheet 82 each include the ion-permeable portion.

In this way, active ions between the positive electrode sheet 81 and the negative electrode sheet 82 can freely pass through the ion-permeable portion, fully utilizing the capacity of the battery cell 7, thereby improving the capacity of the battery cell 7.

In some embodiments, the protective layers 84 on the inner and outer sides of the bent portion of the positive electrode sheet 81 each include the ion-blocking portion; and the protective layers 84 on the inner and outer sides of the negative electrode sheet 82 each include the ion-permeable portion.

In some embodiments, the protective layer 84 on the inner side of the bent portion of the positive electrode sheet 81 includes the ion-blocking portion, and the protective layer 84 on the outer side includes the ion-permeable portion; and the protective layers 84 on the inner and outer sides of the negative electrode sheet 82 each include the ion-permeable portion.

The positive electrode sheet 81 and the negative electrode sheet 82 need to be bent. The negative electrode sheet 82 on the inner side of the positive electrode sheet 81 is likely to have insufficient space for lithium intercalation, which may result in that the negative electrode active substance layer 822 of the negative electrode sheet 82 has fewer lithium intercalation sites than the number of lithium ions that can be provided by the positive electrode active substance layer 812 of the positive electrode sheet 81 adjacent to its outer side, thereby causing lithium precipitation. Therefore, attaching an ion-blocking portion to the inner side of the positive electrode sheet 81 can block at least some of the ions provided by the positive electrode active substance layer 812, so that the blocked ions cannot intercalate into the negative electrode active substance layer 822 with fewer lithium intercalation sites, thereby reducing the occurrence of lithium precipitation. Moreover, the ion-permeable portion on the outer side of the bent portion of the positive electrode sheet 81 realizes normal intercalation, deintercalation and shuttling of ions, fully utilizing the capacity of the battery cell 7, thereby improving the capacity of the battery cell 7 while reducing the risk of thermal runaway of the battery cell 7. Similarly, the ion-permeable portions on the inner and outer sides of the negative electrode sheet 82 realize normal intercalation, deintercalation and shuttling of ions, fully utilizing the capacity of the battery cell 7, thereby improving the capacity of the battery cell 7 while reducing the risk of thermal runaway of the battery cell 7.

In some embodiments, the positive electrode sheet 81 includes a positive electrode current collector 811, the positive electrode current collector 811 is made of aluminum, and the inner and outer sides of the bent portion of the positive electrode sheet 81 are each attached with the protective layer 84.

Attaching the protective layers 84 to both the inner and outer sides of the bent portion of the positive electrode sheet 81 can effectively reduce the risk of cracking of the aluminum positive electrode current collector and detachment of the active substance.

In some embodiments, the inner and outer sides of the two bent portions at an innermost turn of the positive electrode sheet 81 are each attached with the protective layer 84.

The bent portion at the innermost turn of the positive electrode sheet 81 has the largest bending degree and is most likely to crack. Therefore, attaching the protective layers 84 to both the inner and outer sides of the two bent portions at the innermost turn can effectively reduce the risk of cracking of the positive electrode sheet 81 and detachment of the active substance.

In some embodiments, the inner and outer sides of the two bent portions at a second turn of the positive electrode sheet 81 counted from inside to outside are each attached with the protective layer 84.

In some embodiments, the inner and outer sides of the two bent portions at a third turn of the positive electrode sheet 81 counted from inside to outside are each attached with the protective layer 84.

The bent portions at the second turn and the third turn have relatively large bending degree and are more likely to crack. Therefore, attaching the protective layers 84 to both the inner and outer sides of the two bent portions at the second turn and the third turn can effectively reduce the risk of cracking of the positive electrode sheet 81 and detachment of the active substance. Certainly, the protective layers 84 may also be attached to the bent portions of the fourth turn, the fifth turn, and the sixth turn, which are not specifically limited herein.

An embodiment of this disclosure further provides a preparation method for electrode assembly. As shown in FIG. 14, the method includes the following steps.

Step S1: Provide a positive electrode sheet, a negative electrode sheet, and a separator.

Step S2: Attach a protective layer to the positive electrode sheet and/or the negative electrode sheet.

Step S3: Stack and wind the positive electrode sheet, the negative electrode sheet, and the separator as a whole to form a wound structure, where in the wound structure, a separator is sandwiched between the positive electrode sheet and the negative electrode sheet, the positive electrode sheet and the negative electrode sheet each include a plurality of bent portions, an inner side and an outer side of at least one of the bent portions are each attached with the protective layer, and end portions of the protective layers on the inner and outer sides of a same bent portion are staggered at least at one end along the winding direction.

In the embodiments of this disclosure, the protective layer may be attached to the positive electrode sheet and/or the negative electrode sheet first, and then the winding process may be performed. Attaching the protective layer to the positive electrode sheet and/or the negative electrode sheet may be performed in the electrode sheet die-cutting process, and then the winding process may be performed. Attaching the protective layer to the positive electrode sheet and/or the negative electrode sheet can also be performed while winding, for example, a pasting module is integrated in the winding equipment, and the protective layer is pasted on the positive electrode sheet and/or the negative electrode sheet during the winding process of the winding equipment.

It should be noted that the above embodiments are merely intended for describing the technical solutions of this disclosure but not for limiting this disclosure. Although this disclosure is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this disclosure. They should all be covered in the scope of the claims and specification of this disclosure. In particular, as long as there is no structural conflict, the various technical features mentioned in the embodiments can be combined in any manner. This disclosure is not limited to the specific embodiments disclosed in this specification, but includes all technical solutions falling within the scope of the claims.

### INDUSTRIAL APPLICABILITY

This disclosure provides an electrode assembly, a battery cell, a battery, an electric device, and a preparation method for electrode assembly, to achieve high battery cell capacity and reduce the thermal runaway risk.

## Claims

1. An electrode assembly, comprising:
a wound structure, wherein the wound structure is formed by winding a stacked body comprising a positive electrode sheet and a negative electrode sheet along a winding direction, a separator being sandwiched between the positive electrode sheet and the negative electrode sheet, and the positive electrode sheet and the negative electrode sheet each comprising a plurality of bent portions; and
a protective layer, wherein the protective layer is attached to each of an inner side and an outer side of at least one of the bent portions;
wherein end portions of the protective layers on the inner and outer sides of a same bent portion are staggered at least at one end along the winding direction.

2. The electrode assembly according to claim 1, wherein
end portions of the protective layers on the inner and outer sides of the same bent portion are staggered at two ends along the winding direction.

3. The electrode assembly according to claim 1 or 2, wherein
two end portions of the protective layer on the inner side along the winding direction respectively extend beyond two corresponding end portions of the protective layer on the outer side of the same bent portion; or
two end portions of the protective layer on the outer side along the winding direction respectively extend beyond two corresponding end portions of the protective layer on the inner side of the same bent portion; or
one end portion of the protective layer on the inner side along the winding direction extends beyond one corresponding end portion of the protective layer on the outer side of the same bent portion, and the other end portion of the protective layer on the inner side along the winding direction is extended beyond by the corresponding other end portion of the protective layer on the outer side.

4. The electrode assembly according to any one of claims 1 to 3, wherein along a winding axis direction of the wound structure, at least one end of at least one of the protective layers extends beyond active substance of the bent portion.

5. The electrode assembly according to any one of claims 1 to 4, wherein
the end portions of the protective layers on the inner and outer sides of the same bent portion are staggered by a first preset dimension at one end along the winding direction, and the end portions of the protective layers on the inner and outer sides of the same bent portion are staggered by a second preset dimension at the other end along the winding direction,
wherein the first preset dimension is equal to the second preset dimension, or the first preset dimension is not equal to the second preset dimension.

6. The electrode assembly according to any one of claims 1 to 5, wherein
the end portions of the protective layers on the inner and outer sides of the same bent portion are staggered by the first preset dimension at one end along the winding direction, wherein the first preset dimension does not exceed 2 mm; and/or
the end portions of the protective layers on the inner and outer sides of the same bent portion are staggered by the second preset dimension at the other end along the winding direction, wherein the second preset dimension does not exceed 2 mm.

7. The electrode assembly according to any one of claims 1 to 6, wherein
the end portions of the protective layers on the inner and outer sides of the same bent portion are staggered by the first preset dimension at one end along the winding direction, wherein the first preset dimension does not exceed 1.5 mm; and/or
the end portions of the protective layers on the inner and outer sides of the same bent portion are staggered by the second preset dimension at the other end along the winding direction, wherein the second preset dimension does not exceed 1.5 mm.

8. The electrode assembly according to any one of claims 1 to 7, wherein
the end portions of the protective layers on the inner and outer sides of the same bent portion are staggered by the first preset dimension at one end along the winding direction, wherein the first preset dimension does not exceed 1 mm; and/or
the end portions of the protective layers on the inner and outer sides of the same bent portion are staggered by the second preset dimension at the other end along the winding direction, wherein the second preset dimension does not exceed 1 mm.

9. The electrode assembly according to any one of claims 1 to 8, wherein
the positive electrode sheet and the negative electrode sheet each comprise a plurality of straight portions, the plurality of bent portions and the plurality of straight portions of the positive electrode sheet are alternately arranged along the winding direction, and the plurality of bent portions and the plurality of straight portions of the negative electrode sheet are alternately arranged along the winding direction; and
one end of at least one of the protective layers is attached to a side surface of the bent portion along the winding direction, and the other end extends to a side surface of the straight portion adjacent to the bent portion, or
two ends of at least one of the protective layers are both attached to a side surface of the bent portion along the winding direction, or
a middle portion of at least one of the protective layers along the winding direction is attached to a side surface of the bent portion, and two ends extend respectively to side surfaces of the two straight portions adjacent to the bent portion.

10. The electrode assembly according to any one of claims 1 to 9, wherein
the protective layer comprises a main layer made of a polymer material.

11. The electrode assembly according to claim 10, wherein
the polymer material is at least any one of polyvinyl chloride, polyethylene, polypropylene, polyvinylidene fluoride, hexafluoropropylene-vinylidene fluoride copolymer, tetrafluoropropylene-vinylidene fluoride copolymer, trifluorochloropropylene-vinylidene fluoride copolymer, polyethylene terephthalate, polyimide, polyetherimide, polycarbonate, polystyrene, polyphenylene sulfide, polyvinylidene fluoride, polyvinylidene fluoride copolymer, polyarylate, fiber, nylon, or non-woven fabric.

12. The electrode assembly according to claim 10 or 11, wherein
the protective layer further comprises an adhesive layer, wherein the main layer is adhered to the side surface of the bent portion through the adhesive layer.

13. The electrode assembly according to claim 12, wherein a material of the adhesive layer is at least any one of acrylic-acrylate copolymer, butadiene-styrene copolymer, styrene-acrylic copolymer, styrene-acrylate copolymer, ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A type epoxy resin, ethylene-vinyl acetate copolymer bisphenol F type epoxy resin, glycidyl ether type epoxy resin, glycidyl ester type epoxy resin, silicone type resin, polyurethane, or styrene-isoprene-styrene copolymer.

14. The electrode assembly according to any one of claims 1 to 13, wherein
the protective layer comprises an ion-permeable portion and/or an ion-blocking portion.

15. The electrode assembly according to claim 14, wherein the protective layers on the inner and outer sides of the bent portion of the positive electrode sheet each comprise the ion-permeable portion, or
the protective layers on the inner and outer sides of the bent portion of the positive electrode sheet each comprise the ion-blocking portion, or
the protective layer on the inner side of the bent portion of the positive electrode sheet comprises the ion-blocking portion, and the protective layer on the outer side comprises the ion-permeable portion; or
the protective layers on the inner and outer sides of the negative electrode sheet each comprise the ion-permeable portion.

16. The electrode assembly according to claim 14 or 15, wherein air permeability of the ion-permeable portion is 220±70 sec/100 cc.

17. The electrode assembly according to claim 14 or 15, wherein a minimum pore size of the ion-permeable portion is in a range of 100 nm to 400 nm.

18. The electrode assembly according to any one of claims 1 to 17, wherein the positive electrode sheet comprises a positive electrode current collector, the positive electrode current collector is made of aluminum, and the inner and outer sides of the bent portion of the positive electrode sheet are each attached with the protective layer.

19. The electrode assembly according to any one of claims 1 to 18, wherein the inner and outer sides of the two bent portions at an innermost turn of the positive electrode sheet are each attached with the protective layer.

20. A battery cell, comprising: a casing, a cover plate, and at least one electrode assembly according to any one of claims 1 to 19, wherein
the casing has an accommodation cavity and an opening, wherein the electrode assembly is accommodated in the accommodation cavity; and
the cover plate closes the opening of the casing.

21. A battery, comprising:
a box; and
at least one battery cell according to claim 20, wherein the battery cell is accommodated in the box.

22. An electric device, wherein the electric device comprises the battery cell according to claim 20 or the battery according to claim 21 for providing electric energy.

23. A preparation method for electrode assembly, comprising:
providing a positive electrode sheet, a negative electrode sheet, and a separator;
attaching a protective layer to the positive electrode sheet and/or the negative electrode sheet; and
stacking and winding the positive electrode sheet, the negative electrode sheet, and the separator as a whole to form a wound structure, wherein in the wound structure, a separator is sandwiched between the positive electrode sheet and the negative electrode sheet, the positive electrode sheet and the negative electrode sheet each comprise a plurality of bent portions, an inner side and an outer side of at least one of the bent portions are each attached with the protective layer, and end portions of the protective layers on the inner and outer sides of a same bent portion are staggered at least at one end along the winding direction.
